# EUROPEAN PATENT APPLICATION

(11) **EP 1 589 745 A2**
(43) Date of publication of application: **26.10.2005**
(21) Application number: 05008791.5
(22) Date of filing: 21.04.2005
(51) Int. Cl.: H04N 1/387

(54) **Image capturing device and control method therefor**

(30) Priority: 23.04.2004 JP 2004128134
(71) Applicant: NEC CORPORATION, Tokyo (JP)
(72) Inventor: Toba, Hiroyuki, Tokyo (JP)
(74) Representative: Glawe, Delfs, Moll

(57) **Abstract**

A method and apparatus for processing an image in an image capturing device according to one aspect of the technique comprises, detecting whether a state of the image capturing device is in a first state for capturing an image in a first format or a second state for capturing an image in a second format, capturing an image in the second format and cropping the image captured in the second format when the second state is detected, and storing the cropped image. Accordingly, the exemplary method and apparatus provides an image capturing device that can capture an image in a certain format and can store the captured image as image data that can be displayed in a different format without a loss of image quality due to the difference between a format for capturing and a format for displaying the image.

## Description

This application is based upon and claims the benefit of priority from Japanese Patent Application No. 2004-128134, filed on April 23, 2004, the content of which is incorporated herein by reference.

### BACKGROUND OF THE INVENTION

### 1. Field of Invention

The present invention relates to an image capturing device, particularly an image capturing device which can capture and display an image selectively in at least two formats.

### 2. Description of the Related Art

In recent years, various devices, such as mobile phones, have been developed which incorporate a camera function. Among these mobile phones with a camera function, foldable-type mobile phones have become increasingly popular due to their compact appearance.

Japanese Laid-Open Patent No. 2004-112559 discloses a foldable-type camera mobile which can selectively use two displays as camera finder. The first display is used as a vertically oriented camera finder and the second display is used as a horizontally oriented camera finder. According to this mobile phone, when an image is captured with the body opened, the second display displays an image to be captured. On the other hand, when an image is captured with the body in a folded arrangement, the first display operates as a view finder and displays an image to be captured. A user of the foldable-type camera mobile phone can capture an image using either the first display or the second display, and store the captured image data in the mobile phone. The stored image data can be displayed on the displays and the image can be processed. In addition, the stored image data can be displayed on the displays as a standby screen (e.g., as a wallpaper display).

Further, as a result of an increased number of pixels in cameras incorporated in recent camera mobile phones, it is possible to set two or more image sizes for an image to be captured, such as a mail size of "120 by 160", a standby screen size of "240 by 320", and a PC (personal computer) size of "480 by 620". Accordingly a user of such a camera mobile phone can select a desired size from those sizes for an image to be captured.

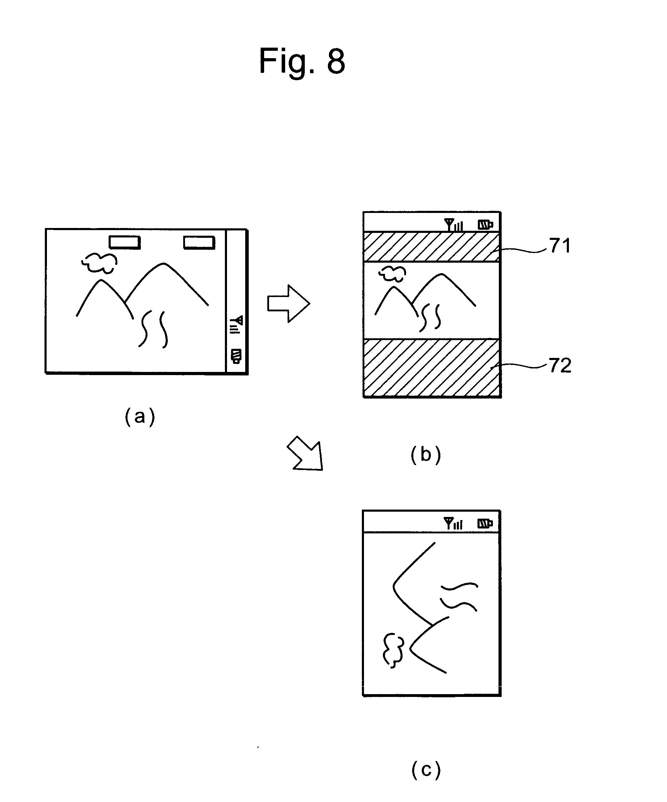

When a stored image data is displayed, a display tends to be used as a vertically oriented display. In this case, when a horizontally oriented image captured is displayed on the vertically oriented display, a part of the captured image may not be displayed. For example, when a "320(horizontal) by 240(vertical)"-sized horizontally oriented image is displayed on a QVGA ("240(horizontal) by 320(vertical)")-sized vertically oriented liquid crystal display, areas on both sides of the horizontally oriented image are not displayed. In order to display the whole part of the horizontally oriented image captured on the vertically oriented display, in general, the horizontally oriented image is reduced in size both vertically and horizontally in an equal reduction ratio such that the image to be displayed has the same width as that of the vertically oriented liquid crystal display, or the image to be displayed is rotated by 90 degrees. Fig. 8(a) shows an example of a image captured by using an display as a horizontally oriented camera finder. Fig. 8(b) shows an example where the image captured by using a display as a horizontally oriented camera finder is reduced in size and displayed on a vertically oriented display. Fig. 8(c) shows an example where an image data captured by using a display as a horizontally oriented camera finder is rotated by 90 degrees and is displayed on a vertically oriented display.

However, when the image is reduced in size, as shown in Fig. 8(b), diagonally shaded portions in the upper and lower portions of the liquid crystal display become non-display areas 71 and 72, resulting in an ineffective use of the large liquid crystal display and an extremely poor appearance. On the other hand, when the image is rotated, as shown in Fig. 8(c), since the horizontal oriented image laterally rotated by 90 degrees is displayed on the vertical oriented liquid crystal display, the image displayed can not be comfortably viewed by a user.

### BRIEF SUMMARY OF THE INVENTION

The present invention is proposed to solve the problems described above and to provide an improved image capturing device. An exemplary object of the present invention is to provide an image capturing device which can capture an image in a certain format and can store the captured image as image data that can be displayed in a different format without a loss of image quality due to the difference between a format for capturing and a format for displaying the image.

A method for processing an image in an image capturing device according to one aspect of the present invention comprises, detecting whether a state of the image capturing device is in a first state for capturing an image in a first format or a second state for capturing an image in a second format, capturing an image in the second format and cropping the image captured in the second format when the second state is detected, and storing the cropped image.

### BRIEF DESCRIPTION OF THE DRAWINGS

The above and other objects, features and advantages of the invention will become more apparent by describing in detail exemplary embodiments thereof with reference to the attached drawings in which:

Fig. 1 illustrates a main part of a camera mobile phone according to an first exemplary embodiment of the present invention;

Fig. 2 illustrates an example of an external appearance of the camera mobile phone according to the first exemplary embodiment during capturing an image;

Fig. 3 illustrates an example of an external appearance of the camera mobile phone according to the first exemplary embodiment during capturing an image;

Fig. 4 illustrates a flow of a process of capturing an image and storing the image for the camera mobile phone according to the first exemplary embodiment;

Fig. 5(a) illustrates an appearance of a liquid crystal display of the camera mobile phone according to the first exemplary embodiment when the liquid crystal display is used as a vertically oriented camera finder;

Fig. 5(b) illustrates an appearance of the liquid crystal display when the liquid crystal display of the camera mobile phone according to the first exemplary embodiment is used as a horizontally oriented camera finder;

Fig. 6 illustrates an example of a process of cutting an image;

Fig. 7 illustrates an external appearance of a camera mobile phone according to second exemplary embodiment of the present invention when capturing an image; and

Figs. 8(a) to 8(c) illustrates a process of capturing and storing an image in a conventional camera mobile phone.

### DETAILED DESCRIPTION OF THE INVENTION

According to the present invention, an image capturing device detects whether a state of the image capturing device is in a first state for capturing image in a first format or a second state for capturing image in a second format. For example, the state of the image capturing device may be defined by a direction in which the image capturing device oriented, a relation between a first part and a second part of the image capturing device (e.g., with respect to a foldable type device, whether bodies of the device are opened or folded) or a display used for capturing or displaying an image in the image capturing device having two or more displays. However, the state of the image capturing device is not limited to as described above, as long as the image capturing device can capture or display an image in at least two different states. When the second state is detected, the image capturing device captures an image in a second format and crops the captured image and stores the cropped image. In addition, the image capturing device displays the cropped image in the first format. The cropped image may be of a suitable size for the displaying in the first format. Accordingly, the image captured in a second format may be displayed in a first format.

In addition, the image in the first format may be vertically oriented, and the image in the second format may be horizontally oriented.

Furthermore, the cropped image may be displayed in a first image size as an image in the first format, the image is captured in second image size as an image in the second format. In this case, the image capturing device crops the captured image in the second size by trimming it to an image size corresponding to the first image size.

The image capturing device may display the cropped image on a first display in the first format, and may capture the image in the second format by using a second display as a camera finder.

In addition, the image capturing device may comprise a first body and second body. The second body is connected with the first body by means of a hinge, and pivots on the hinge with respect to the first body between a open position and a folded position. In the open position, the first body and the second body are away from each other. On the other hand, in the folded position, the first body and the second body are close to each other. In this case, the image capturing device may display the cropped image in the first format when the first body and second body are in the opened position, and may capture the image in the second format when the first and second body are in the closed position.

Exemplary embodiments of the invention will now be described below by reference to the attached Figures. The described exemplary embodiments are intended to assist the understanding of the invention, and are not intended to limit the scope of the invention in any way.

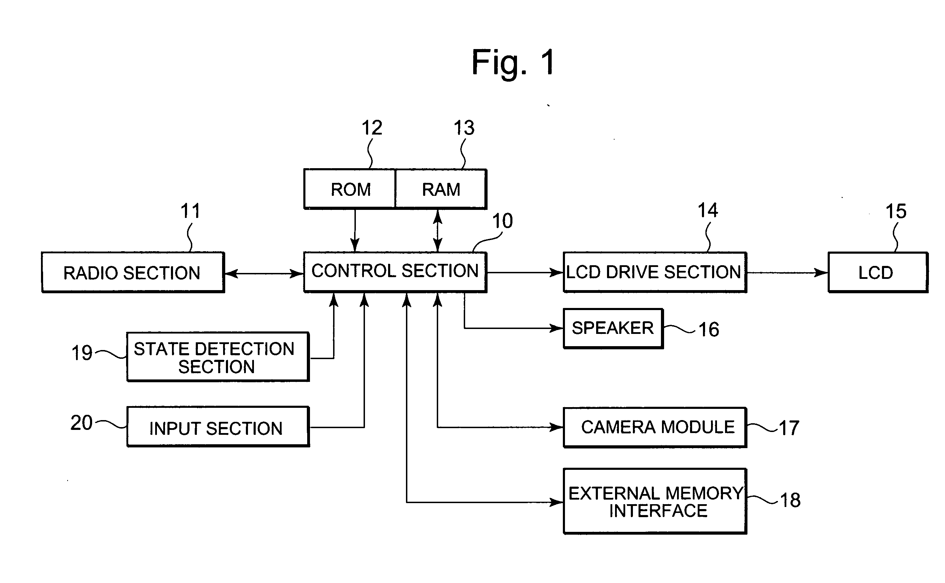

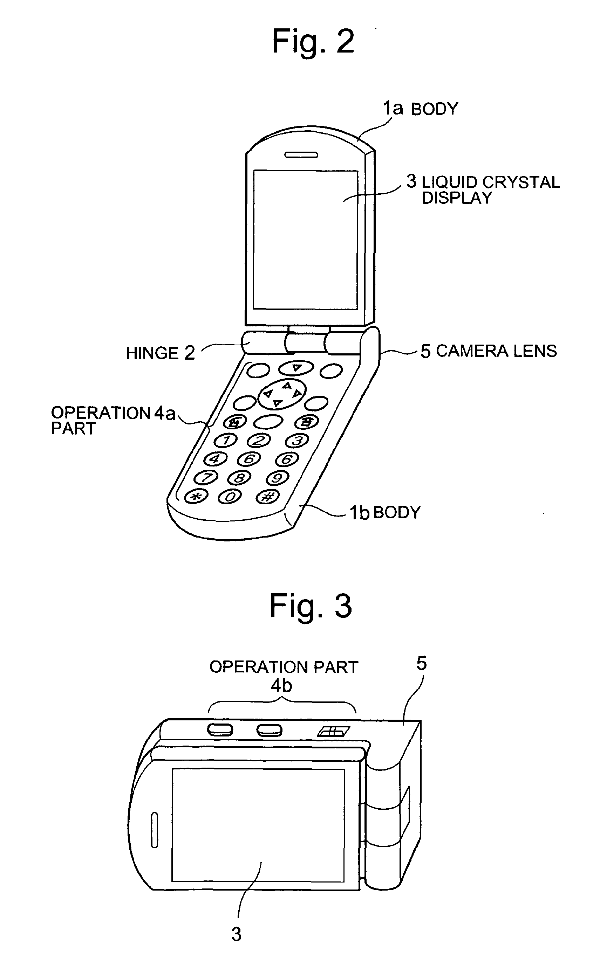

Fig. 1 is a block diagram showing a main part of a camera mobile phone according to a first exemplary embodiment of the present invention. Figs. 2 and 3 are schematic diagrams showing an example of an external appearance of the camera mobile phone according to the exemplary embodiment during capturing an image.

Referring to Figs. 2 and 3, the following will first discuss the external configuration of the camera mobile phone according to the first exemplary embodiment. The camera mobile phone of the first exemplary embodiment is a foldable-type camera mobile phone which comprises two bodies 1a and 2b connected to each other by a hinge 2. The bodies 1a and 2b can pivot on the hinge 2 with respect to each other so as to transform between a folded position and an open position. In the folded position, the two bodies 1a and 1b are close to each other. On the other hand, in the open position, the two bodies 1a and 1b are away from each other. The body 1a comprises a liquid crystal display 3 on one surface. The body 1a is so configured as to horizontally rotate by 180 degrees on a portion supported by the hinge 2. The body 1b comprises an operation part 4a on one surface and an operation part 4b on a predetermined side, and a camera lens 5.

The camera mobile phone captures an image in a first format and a second format. When an image is captured in the first format, the liquid crystal display 3 of the mobile camera phone is used as a vertically oriented camera finder (i.e., in portrait mode) and the bodies 1a and 1b are in the open position. Further, an inputting operation for capturing an image is performed on the operation part 4a provided on the body 1b. On the other hand, when an image is captured in the second format, the liquid crystal display 3 is used as a horizontally oriented camera finder (i.e., in landscape mode), the bodies 1a and 1b are in the folded position, and image capturing is performed on the operation part 4b provided on the side of the body 1b.

Also, the camera mobile phone displays an image in a first format and a second format. When an image is displayed in the first format, the liquid crystal display 3 is used as a vertically oriented display (i.e., in portrait mode) and the bodies 1a and 1b are in the open position. When an image is displayed in the second format, the liquid crystal display 3 is used as a horizontally oriented display (i.e., in landscape mode) and the bodies 1a and 1b are in the folded position.

In the present exemplary embodiment, a difference between the first format and the second format is a orientation of image. However, the difference between the first format and the second format may be a difference in a size of image, a resolution of image and so on. Further, the difference between the first format and the second format may be a difference in a position of bodies 1a and 1b (i.e., the open position or the folded position) in which an image is captured or displayed.

In the present exemplary embodiment, the camera mobile phone captures and displays an image in two formats. However, the camera mobile phone may capture or display an image in three or more formats. In this case, a difference between the formats may be a difference in a size of image, a resolution of image, a orientation of image, a position of the bodies 1a and 1b (i.e., the open position or the folded position) in which an image is captured or displayed and so on. Also, the difference between the formats may be a difference in any combinations of a size of image, a resolution of image, a orientation of image, a position of the bodies 1a and 1b (i.e., the open position or the folded position) in which an image is captured or displayed and so on.

Referring back to Figs. 2 and 3, a camera lens 5 is disposed near the hinge 2 of the body 1b so as to face a subject to be captured as an image in both the first and second format.

In addition, the mobile camera phone is in an out-of-use state where the bodies 1 a and 1b are in the folded position with the liquid crystal display 3 facing inside when the image capturing function of the mobile camera phone is not used (e.g., when the mobile camera phone is carried by its user).

In this exemplary embodiment, the mobile camera phone is a foldable-type mobile phone and comprises two bodies. However, a straight-type (i.e., non-foldable type) mobile phone is also applicable to the invention so long as an image can be captured and displayed in at least two formats. Moreover, devices other than a mobile phone equipped with an image capturing function, such as Personal Digital Assistant (PDA), a digital camera, etc, are also applicable to the invention.

Referring to Fig. 1, the following will discuss the main configuration of the camera mobile phone according to the first exemplary embodiment. The camera mobile phone of the first exemplary embodiment comprises a control section 10, a radio section 11, a ROM 12, a RAM 13, a liquid crystal display device (LCD) drive section 14, an LCD 15, a speaker 16, a camera module 17, an external memory interface 18, a state detection section 19, and an input section 20. Moreover, the mobile phone comprises well-known functions of mobile phones (not shown).

The radio section 11 transmits and receives radio waves. The LCD 15 displays an image and can be used as a camera finder when capturing an image. The LCD 15 is a display device which comprises a liquid crystal display corresponding to the liquid crystal display 3 in Figs. 2 and 3 of "240 by 320" QVGA size. The liquid crystal display 3 may be of sizes other than QVGA. In addition, in this exemplary embodiment, liquid crystal display is employed as a display device. However, any other types of display device can be equally applicable to the invention, such as an organic electroluminescence display, etc.

The liquid crystal display device (LCD) drive section 14 drives the LCD 15. The external memory interface 18 writes and reads data to and from an external memory. The external memory may be a memory card represented by a SD (secure digital) or the like and a storage device connected via a communication cable. The input section 20 comprises the operation parts 4a and 4b shown in Figs. 2 and 3 which comprise keys necessary for operations of the mobile phone as well as operation keys for image capturing.

The camera module 17 captures an image, which is a module of the configuration of a well-known digital camera comprising a camera lens 5 (shown in Figs. 2 and 3), image capturing devices, and so on. The camera module 17 enables capturing images with a plurality of image sizes including an electronic mail size of "120 by 160", a standby display size of "240 by 320", and a PC (personal computer) size of "480 by 620."

The state detection section 19 detects whether a current state of the camera mobile phone is in the first state described in Fig. 2 (for capturing and displaying an vertically oriented image), in the second state described in Fig. 3 (for the capturing and displaying a horizontally oriented image), or the out -of -use state. These states can be readily detected by any suitable means for mechanically or electronically detecting whether the bodies 1a and 1b are in the open position or in the folded position (e.g., detection an angle between the bodies 1a and 1b) and the rotation of the body 1a, which can be achieved by well known techniques and thus a detailed explanation thereof is omitted.

The ROM 12 stores programs and data required for operating the mobile phone.

The control section 10 performs necessary processing according to the programs stored in the ROM 12 beforehand. For example, the control section 10 receives a signal from the input section 20 and controls the radio section 11 performing a communication via radio signal (including data communication and calls), as well as the camera module 17, the LCD 15, and the speaker 16. In terms of the camera module 17 and the LCD 15, the control section controls a processing including an image size setting, cutting an image (e.g., image cropping), displaying an image, and so on. These operations are described in detail below. Further, the control section 10 stores setting information required for an image capturing and captured image data in the RAM 13, and reads out the stored image data from the RAM 13. In addition, the control section 10 displays the image data on the LCD 15. Furthermore, during capturing an image, when a predetermined button (e.g., a shutter button) of the input section 20 is pressed, the control section 10 causes the speaker 16 to output a shutter sound according to data regarding the shutter sound stored in the ROM 14.

The following will specifically describe operations of the camera mobile phone according to the first exemplary embodiment. Since operations for placing and receiving calls and sending and receiving electronic mail are well known, an explanation thereof is omitted and the following will only describe an operation of capturing and storing an image. Moreover, in the following explanation, the liquid crystal display 3 has a QVGA size of "240 by 320", and three image sizes of the mail size "120 by 160", the standby display size "240 by 320", and the PC (personal computer) size "480 by 620" can be selected as a size of a image to be captured.

### (Image size setting)

The user sets the size of an image before capturing an image. The size of an image is set in a camera setting mode. To be specific, while the bodies 1a and 1b are in open position (Fig. 2), the user performs an inputting operation on the operation part 4a to start the camera setting mode. In response to the inputting operation, the control section 10 reads out, from the ROM 12 and the RAM 13, data required for the setting of an image capturing (e.g., data about a setting window and setting information which has been set already) and displays the data on the liquid crystal display 3. The user selects an option of image size on the setting window displayed on the liquid crystal display 3 and selects a desired size from the mail size, the standby display size, and the PC size. The option selection and size selection are performed by an input from the operation part 4a. When a size is selected, the control section 10 sets the selected image size as an image size of image to be captured and stores the setting information in the RAM 13.

### (Camera photographing/image storage)

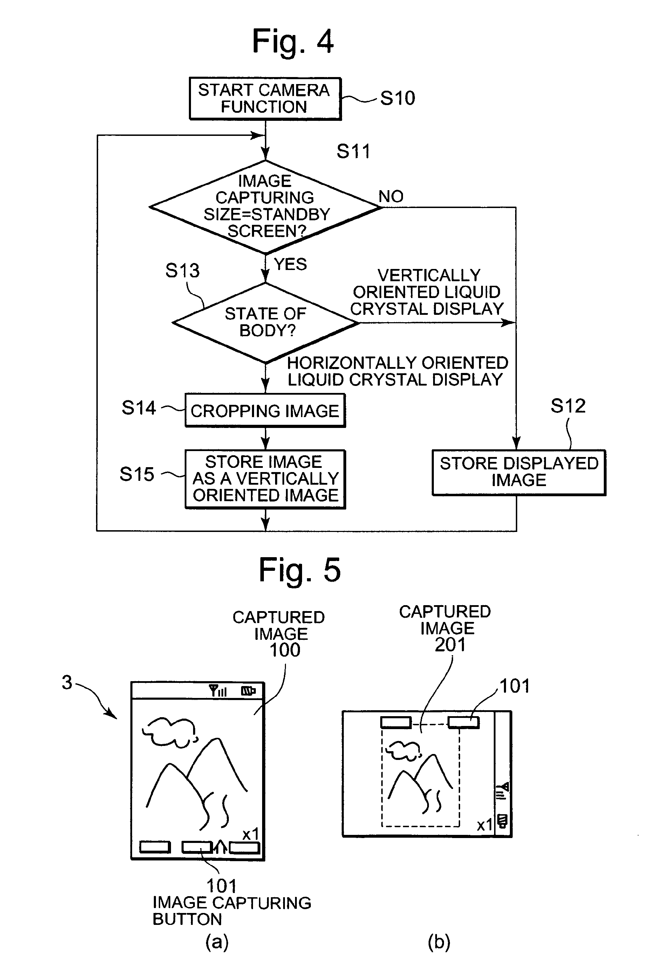

The following will describe an operation of capturing and storing images. Fig. 4 shows a flow chart of the operation of capturing and storing an image. Referring to Figs. 1 to 4, the operation will be discussed below.

When the user performs an inputting operation requesting the capturing of an image in the input section 20, the control section 10 starts the camera function (step S10). After the camera function is started, the control section 10 decides whether a currently selected image size is set as the standby display size on to the setting information of the RAM 13 (step S11). If "No" is decided (i.e., the image size is not set as the standby size), the control section 10 captures an image with the specified image size and displays and stores the captured image (step S 12).

If "Yes" is decided (i.e., the image size is set to the display size) in step S11, the control section 10 decides whether the bodies are in the first state (for capturing and displaying an vertically oriented image) or the second state (for capturing and displaying an horizontally oriented image) at present (step S13). When it is decided that the bodies are in the first state, the flow advances to step S12 to perform capturing and storing of the image. As shown in Fig. 5(a), in this case, the liquid crystal display 3 is used as a vertically oriented camera finder, and a captured vertically oriented image 100 with the standby display size (240(horizontal) by 320(vertical)) is fully displayed on the liquid crystal display 3. The image 100 is successively captured and renewed through the lens 5 and displayed on the liquid crystal display 3. During image capturing operation, an image capturing button (shutter button) 101 serving as user guidance of operations is displayed with the image on the display 3. When the user selects and inputs the image capturing button 101 (or presses an operation key corresponding to the image capturing button 101), the control section 10 displays the image currently captured on the liquid crystal display 3 as a static image. Subsequently, when the static image is displayed, a storage button is displayed instead of the image capturing button 101. When the user selects and inputs the storage button (or presses an operation key corresponding to the storage button), the control section 10 stores image data (240(horizontal) by 320(vertical)) corresponding to the displayed static image in the RAM 13. Specific information (including date information) for specifying the image data may also be added to the stored image data. A storage area is prepared in advance as, e.g., a data folder.

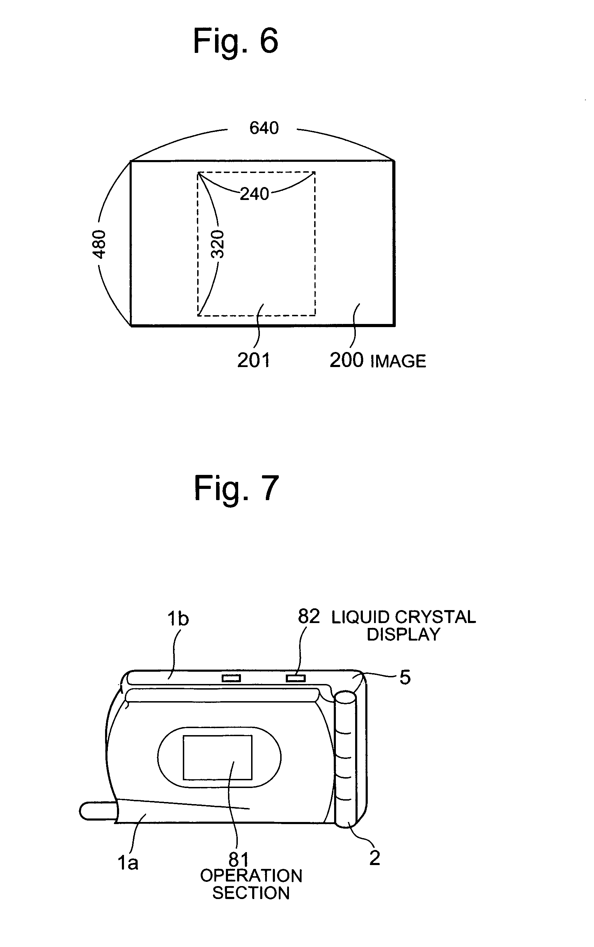

On the other hand, when it is decided in step S13 that the bodies are in the second state, the control section 10 crops a successively captured mage (step S14). As shown in Fig. 6, in the operation of cropping image, the successively captured horizontally oriented image 200 with the PC size (620(horizontal) by 480(vertical)) is trimmed to the vertical oriented image 201 with the standby display size (240(horizontal) by 320(vertical)). As shown in Fig. 5(b), in this case, the liquid crystal display 3 is used as a horizontally oriented camera finder and the cropped and vertical oriented image 201 is reduced in size and displayed on the liquid crystal display 3. During image capturing operation, the image capturing button (shutter button) 101 serving as user guidance of operations is displayed with the trimmed and vertically oriented image 201 on the display 3. When the user selects and inputs the image capturing button 101 (or presses an operation key corresponding to the photographing button 101), the control section 10 displays the vertically oriented image 201 trimmed from the currently captured image 200 on the liquid crystal display 3 as a static image. Subsequently, when the static image is displayed, the storage button is displayed instead of the image capturing button 101. When the user selects and inputs the storage button (or presses an operation key corresponding to the storage button), the control section 10 stores image data (240(horizontal) by 320(vertical)) which corresponds to the displayed static vertical oriented image, in the RAM 13. Specific information (including date information) for specifying the image data may also be added to the stored image data. In addition, it is desirable that the trimmed image 201 is the center part of the image 200.

Moreover, when the bodies 1a and 1b is in the out-of-use state where the bodies 1a and 1b may be in folded position with the liquid crystal display 3 facing inside, the operation of capturing and storing image is completed.

According to the above-described operation of capturing and storing image, when the standby display size is set as an image size for the image to be captured and stored, a vertically oriented image with the image size of (240(horizontal) by 320(vertical)) is stored as a captured image in the RAM 13 regardless of the state of the mobile camera phone.

### (Display of stored image data)

Normally the user displays image data stored in the RAM 13 on the liquid crystal display 3 or sets the image data as a standby display by using the display 3 as a vertically oriented display (in the first state) (Fig. 2). The following will briefly describe an exemplary operation of displaying image data stored in the RAM 13 on the liquid crystal display 3.

When the user performs a predetermined inputting operation on the input section 20 to display the list of image data stored in the data folder, the control section 10 displays list information about images stored in the RAM 13 (e.g., a list of the specific information), on the liquid crystal display 3 in response to the inputting operation. When the user selects specific information corresponding to image data to be displayed from the displayed list, the control section 10 reads out the image data corresponding to the selected specific information from the RAM 13 and displays the image data on the liquid crystal display 3.

According to the first exemplary embodiment, it is possible to display the whole part of the image captured in the second format as on the liquid crystal display 3 in the first format without reducing the image in size display. Further, the whole part of the image captured in the second format can be displayed without rotating the image on the liquid crystal display 3 in the first format, the user can operate the mobile camera phone comfortably.

### (Second exemplary embodiment)

In the above-described exemplary embodiment, an image is captured using the single liquid crystal display 3 provided on the body 1a in either first state or second state. According to second exemplary embodiment, another liquid crystal display is provided on the body 1 a and an image may be captured using either the liquid crystal display 3 or the other liquid crystal display. The following will describe a camera mobile phone which comprises two liquid crystal displays and captures an image using one of the liquid crystal display as a vertically oriented display and using the other liquid crystal display as an horizontally oriented display.

Fig. 7 is a schematic diagram showing an example of an external appearance of the camera mobile phone according to the second exemplary embodiment during capturing an image. Referring to Fig. 7, in addition to the configuration of Fig. 2, the camera mobile phone of the second exemplary embodiment comprises a liquid crystal display 81 on the opposite surface from a liquid crystal display on a body 1a. In addition, the camera mobile phone further comprises an operation part 82 for image capturing on a predetermined side of a body 1b. In general, the liquid crystal display 81 is used as a sub display and thus is smaller in size than the liquid crystal display 3. The size of and the position of the display 81 are not limited to the configuration described above. Any combination of sizes and positions of the display 3 and the display 81 may be applicable to the invention, as long as an image can be captured and displayed by using either the display 3 or the display 81. In addition, in this exemplary embodiment, a liquid crystal display is employed as a display 81 device. However, any other types of display device can be applicable to the invention, such as an organic electroluminescence display, etc.

The camera mobile phone captures and displays an image in a third state and a fourth state. When the mobile camera phone is in the third state, an image is captured and displayed in the third format using the liquid crystal display 3, and the bodies 1a and 1b are in the open position. On the other hand, when the mobile camera phone is in the fourth state, an image is captured and displayed in the forth format using liquid crystal display 81, and the bodies 1a and 1b are in the folded position. The difference between the third format and the fourth format may be a difference in a size of image, a orientation of image, a resolution of image, and so on. Further, the difference between the first format and the second format may be a difference in a display by which an image is captured or displayed and a position of the bodies 1a and 1b (i.e., the open position or the folded position) in which an image is captured or displayed.

In the present exemplary embodiment, the camera mobile phone captures and displays an image in two formats. However, the camera mobile phone may capture or display an image in three or more formats. In this case, a difference between the formats may be a difference in a size of image, a resolution of image, a orientation of image, a display by which an image is captured or displayed, a position of the bodies 1a and 1b (i.e., the open position or the folded position) in which an image is captured or displayed and so on. Also, the difference between the formats may be a difference in any combinations of a size of image, a resolution of image, a orientation of image, a display by which an image is captured or displayed, a position of the bodies 1a and 1b (i.e., the open position or the folded position) in which an image is captured or displayed and so on.

According to the second exemplary embodiment, when the mobile camera phone is in the third state, an image in the third format is captured using the liquid crystal display 3 as a vertical oriented camera finder as shown in Fig. 2, and a captured image of Fig. 5(a) is displayed on the display 3. When the mobile camera phone is in the forth state, an image in the forth format is captured using the liquid crystal display 81 as a horizontally oriented camera finder as shown in Fig. 7, and a captured image of Fig. 5(b) is displayed on the display 81.

The main part of the camera mobile phone according to the second exemplary embodiment is basically similar to that of Fig. 1 except that two LCD drive sections and two LCDs are provided so as to correspond to the liquid crystal displays 3 and 81, respectively, and a control section controls the liquid crystal displays 3 and 81. Moreover, settings of an image size, an operation of capturing and storing image, and an operation of displaying stored image data are performed in a similar manner to that according to the first exemplary embodiment. Hence, the camera mobile phone of the second exemplary embodiment can achieve the same operation and effect as Fig. 1.

According to the second exemplary embodiment, an operation of capturing, storing, and displaying image in the third state and the fourth state is identical to that in the first state and the second state according to the first exemplary embodiment, respectively.

According to the exemplary embodiments, when capturing an image in the second or fourth state, the liquid crystal display only displays the image 201 which is trimmed from the whole part of captured image 200 having been photographed in the PC size (620(horizontal) by 480(vertical)) as shown in Fig. 5(b). However, the whole part of captured image 200 including the trimmed image 201 may be displayed on the liquid crystal display. In this case, the trimmed image 201 may be visually distinguished from the other part of the captured image 200 by drawing a frame of a dotted line and so on.

Further, the size of the trimmed image is not limited to the standby display size. For example, in the camera mobile phone of second exemplary embodiment shown in Fig. 7, the image size of the trimmed image may be a size suit for the liquid crystal display 81.

Additionally, an image size for image to be captured is not limited to three sizes of the mail size, the standby display size, and the PC size. For example, any combination of two image sizes different from each may be applicable to a set of image size according to the present invention.

While the present invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the following claims.

## Claims

1. A method for processing image in an image capturing device, comprising:
detecting whether a state of the image capturing device is in a first state for capturing an image in a first format or a second state for capturing an image in a second format;
capturing an image in the second format and cropping the image captured in the second format when the second state is detected; and
storing the cropped image.

2. A method according to claim 1, further comprising
displaying the cropped image in the first format.

3. A method according to claim 2, wherein the image in the first format is vertically oriented, and the image in the second format is horizontally oriented.

4. A method according to claim 3, further comprising selecting one of a first image size and a second image size as a size for capturing an image; wherein the image is captured in the first size when the first image size is selected and the image is captured in the second size in the step of capturing the image when the second image size is selected.

5. A method according to claim 4, further comprising storing all of the captured image when the first size is selected, wherein the image is cropped in the step of the cropping when the second image is selected.

6. A method according to claim 2, wherein the cropped image is displayed in a first image size as an image in the first format in the step of displaying, the image is captured in second image size as an image in the second format in the step of capturing.

7. A method according to claim 6, wherein the captured image in the second image size is trimmed to an image size corresponding to the first image size in the step of cropping.

8. A method according to claim 2, wherein the image is displayed on a first display in the first format, and the image is captured in the second format by using a second display as a camera finder.

9. A method according to claim 8, wherein the image in the first format is vertically oriented, and the image in the second format is horizontally oriented.

10. A method according to claim 8, wherein the image is displayed in a first image size as an image in the first format in the step of the displaying, the image is captured in second image size as an image in the second format in the step of capturing.

11. A method according to claim 10, wherein the captured image in the second image size is trimmed to an image size corresponding to the first image size in the step of cropping.

12. A device comprising:
a body comprising,
a detector which detects whether a state of the device is in a first state for capturing an image in a first format or a second state for capturing an image in a second format;
a camera module which captures an image in the second format and crops the image captured in the second format when the second state is detected; and
a memory which stores the cropped image.

13. A device according to claim 12, further comprising
a display which displays the cropped image in the first format.

14. A device according to claim 13, wherein the image in the first format is vertically oriented, and the image in the second format is horizontally oriented.

15. A device according to claim 14, further comprising
a controller, coupled to the camera module, the display and the memory, which selects one of a first image size and a second image size as a size for capturing an image; wherein the camera module captures the image in the first size when the first image size is selected and the camera module captures the image in the second size in the step of capturing the image size when the second image size is selected.

16. A device according to claim 15, wherein the memory stores the whole part of the captured image when the first size is selected, and the camera module crops the image when the second image is selected.

17. A device according to claim 13, wherein the display displays the cropped image in a first image size as an image in the first format, and the camera module captures the image in second image size as an image in the second format.

18. A device according to claim 17, wherein the camera module crops the captured image by trimming the captured image in the second image size to an image size corresponding to the first image size.

19. A device according to claim 12, further comprising
a first display, coupled with the camera module and the memory, which displays the cropped image in the first format, and
a second display coupled to the camera module and the memory, wherein
the camera module captures the image in the second format by using the second display as a camera finder.

20. A device according to claim 19, wherein the image in the first format is vertically oriented, and the image in the second format is horizontally oriented.

21. A device according to claim 19, wherein the first display displays the cropped image in a first image size as an image in the first format, and the camera module captures the image in second image size as an image in the second format.

22. A device according to claim 21, wherein the camera module crops the captured image by trimming the captured image in the second image size to an image size corresponding to the first image size.

23. A device according to claim 12, wherein the body comprises
a first body; and
a second body connected with the first body by means of a hinge, the second body pivoting on the hinge with respect to the first body between a open position and a folded position, the open potion where the first body and the second body are away from each other, and the folded position where the first body and the second body are close to each other.

24. A device according to claim 23, wherein the display displays the cropped image in the first format when the first body and second body are in the opened position, and the camera module captures the image in the second format when the first and second body are in the closed position.

25. A device according to claim 24, wherein the image in the first format is vertically oriented, and the image in the second format is horizontally oriented.

26. A device according to claim 24, wherein the display displays the cropped image in a first size as an image in the first format, and the camera module captures the image in a second size as am image in the second format.

27. A device according to claim 26, wherein the camera module crops the captured image by trimming the captured image in the second image size to an image size corresponding to the first image size.

28. A device comprising:
a body comprising,
detecting means detecting whether a state of the device is in a first state for capturing an image in a first format or a second state for capturing an image in a second format;
image capturing means for capturing an image in the second format and for cropping the image captured in the second format when the second state is detected; and
storing means for storing the cropped image.

29. A device according to claim 28, further comprising
displaying means for displaying the cropped image in the first format.

30. A device according to claim 29, wherein the image in the first format is vertically oriented, and the image in the second format is horizontally oriented.

31. A device according to claim 29, wherein the displaying means displays the cropped image in a first image size as an image in the first format, and the image capturing means captures the image in second image size as an image in the second format.

32. A device according to claim 31, wherein the image capturing means crops the captured image by trimming the captured image in the second image size to an image size corresponding to the first image size.

33. A device according to claim 28, further comprising
a first displaying means, coupled to the image capturing means and the storing means, for displaying the cropped image in the first format, and
a second displaying means, coupled to the image capturing means and the storing means, for displaying an image to be captured wherein
the camera module captures the image in the second format by using the second display as a camera finder.

34. A device according to claim 33, wherein the image in the first format is vertically oriented, and the image in the second format is horizontally oriented.

35. A device according to claim 33, wherein the first display means displays the cropped image in a first image size as an image in the first format, and the image capturing means captures the image in second image size as an image in the second format.

36. A device according to claim 35, wherein the image capturing means crops the captured image by trimming the captured image in the second image size to an image size corresponding to the first image size.

37. A device according to claim 28, wherein the body comprises
a first body; and
a second body connected with the first body by means of a hinge, the second body pivoting on the hinge with respect to the first body between a open position and a folded position, the open position where the first body and the second body are away from each other, and the folded position where the first body and the second body are close to each other.

38. A device according to claim 37, wherein the displaying means displays the cropped image in the first format when the first body and second body are in the opened position, and the image capturing means captures the image in the second format when the first and second body are in the closed position.

39. A device according to claim 38, wherein the image in the first format is vertically oriented, and the image in the second format is horizontally oriented.

40. A device according to claim 38, wherein the displaying means displays the cropped image in a first size as an image in the first format, and the image capturing means captures the image in a second size as an image in the second format.

41. A device according to claim 40, wherein the image capturing means crops the captured image by trimming the captured image in the second image size to an image size corresponding to the first image size.
